(19) Europäisches Patentamt
European Patent Office
Office européen des brevets

(11) EP 2 779 284 A1

(12) EUROPEAN PATENT APPLICATION

(43) Date of publication:
17.09.2014 Bulletin 2014/38

(51) Int Cl.:
H01M 4/485 (2010.01)     H01M 4/505 (2010.01)
H01M 4/525 (2010.01)     H01M 10/0525 (2010.01)
H01M 10/0568 (2010.01)   H01M 10/44 (2006.01)

(21) Application number: 14157842.7

(22) Date of filing: 05.03.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 15.03.2013 JP 2013052681

(71) Applicant: Kabushiki Kaisha Toshiba
Tokyo 105-8001 (JP)

(72) Inventors:
• Tanaka, Masanori
  Tokyo, 105-8001 (JP)
• Saruwatari, Hidesato
  Tokyo, 105-8001 (JP)
• Kuriyama, Kazuya
  Tokyo, 105-8001 (JP)

(74) Representative: HOFFMANN EITLE
Patent- und Rechtsanwälte
Arabellastrasse 4
81925 München (DE)

(54) **Nonaqueous electrolyte battery**

(57) There is provided a nonaqueous electrolyte battery (1). The nonaqueous electrolyte battery (1) includes an electrode group (2) containing a positive electrode (3) comprising 12-34 wt% nickel, and a negative electrode (4) comprising 39-51 wt% titanium, and a nonaqueous electrolyte held in the electrode group (2). The nonaqueous electrolyte battery (1) satisfies the following relation (1): $-0.07 \leq (D_A - D_C) \times S/B \leq 0.05$. The nonaqueous electrolyte battery shows an improved capacity retention ratio after a warming step after initial charging. Also the use of boron-salt in the electrolyte is beneficial for the capacity retention ratio.

FIG. 7

Printed by Jouve, 75001 PARIS (FR)

**Description**

FIELD

Embodiments described herein relate generally to a nonaqueous electrolyte battery.

BACKGROUND

Chargeable and dischargeable nonaqueous electrolyte batteries, for example, lithium ion secondary batteries are mainly used as the power supply of electric vehicles such as hybrid electric vehicles and plug-in electric vehicles that have rapidly become popular in recent years. A lithium ion secondary battery is manufactured by, for example, the following method. After an electrode group in which a positive electrode and a negative electrode are coiled or stacked with a separator sandwiched therebetween is produced, the electrode group is accommodated in a case made of a metal such as aluminum or aluminum alloy. Next, a sealing body is welded to an opening of the case, a nonaqueous electrolytic solution is injected into the case through a inlet provided in the sealing body, and then a sealing member is welded to the inlet. Then, a lithium ion secondary battery is obtained after initial charging or ageing treatment.

The nonaqueous electrolyte battery needs measures for cycle characteristics. One of such measures is a measure against overdischarge of the positive electrode. Measures against overdischarge include, for example, a method of preventing overdischarge by a secondary device such as a protection element or protection circuit, a method of using a sub-active material for the negative electrode, and a method of raising the final discharge voltage. However, these methods could cause the energy density to decrease. Thus, measures to prevent a decrease in energy density are desired.

BRIEF DESCRIPTION OF THE DRAWINGS

FIG. 1 is a graph schematically showing exemplary charge and discharge curves of a nonaqueous electrolyte battery according to an embodiment;

FIG. 2 is a schematic sectional view of an exemplary first three-pole cell produced to measure a discharge capacity $D_c$ for a nonaqueous electrolyte battery according to an embodiment;

FIG. 3 is a schematic perspective view of an example of a nonaqueous electrolyte battery according to an embodiment;

FIG. 4 is a schematic exploded perspective view of the nonaqueous electrolyte battery shown in FIG. 3;

FIG. 5 is a further schematic exploded perspective view of the nonaqueous electrolyte battery shown in FIG. 3;

FIG. 6 is a schematic partially developed perspective view of the electrode group included in the nonaqueous electrolyte battery shown in FIG. 3;

FIG. 7 is a graph schematically showing charge and discharge curves of a nonaqueous electrolyte battery according to Example 1;

FIG. 8 is a graph schematically showing charge and discharge curves of a nonaqueous electrolyte battery according to Example 2; and

FIG. 9 is a graph schematically showing charge and discharge curves of a nonaqueous electrolyte battery according to Comparative Example 2.

DETAILED DESCRIPTION

In general, according to one embodiment, there is provided a nonaqueous electrolyte battery. The nonaqueous electrolyte battery includes an electrode group containing a positive electrode and a negative electrode, and a nonaqueous electrolyte held in the electrode group. The positive electrode includes a positive electrode layer containing nickel in the quantity of 12 wt% or more but 34 wt% or less. The negative electrode includes negative electrode layer. The negative electrode layer contains titanium in the quantity of 39 wt% or more but 51 wt% or less. A portion of the negative electrode layer is opposed to the positive electrode layer. The nonaqueous electrolyte battery satisfies the following relation (1): $-0.07 \leq (D_A-D_C) \times S/B \leq 0.05$. B [Ah] is a discharge capacity of the nonaqueous electrolyte battery. The B is obtained by charging the nonaqueous electrolyte battery up to a maximum usage voltage with a constant current at a rate of 0.05 C and at 25°C, and then charging the nonaqueous electrolyte battery with a constant voltage until a current value becomes 0.01 C, and then discharging the nonaqueous electrolyte battery up to a final discharge voltage at a rate of 0.05 C. S [cm$^2$] is an area of a portion of the negative electrode layer opposed to the positive electrode layer. $D_C$ [mAh/cm$^2$] is a discharge capacity of the positive electrode. The $D_C$ is obtained by discharging the positive electrode from a fully charged state up to 3.0 V (vs. Li/Li$^+$) at 25°C and at a rate of 0.05 C. $D_A$ [mAh/cm$^2$] is a discharge capacity of the negative electrode. The $D_A$ is obtained by discharging the negative electrode from a fully charged state up to 2.0 V (vs. Li/Li$^+$) at 25°C and at a rate of 0.05 C.

The embodiments will be explained below with reference to the drawings. In this case, the structures common to all embodiments are represented by the same symbols and duplicated explanations will be omitted.

In the description that follows, the direction in which Li ions are released from a positive active material is defined as "charge" and the direction in which Li ions are absorbed into a positive active material is defined as "discharge". In addition, the direction in which Li ions are absorbed into a negative active material is defined as "charge" and the direction in which Li ions are released from a negative active material is defined as "discharge".

A discharge capacity B is a discharge capacity as a nonaqueous electrolyte battery. The "maximum usage voltage" used to determine the discharge capacity B is the maximum voltage at which the nonaqueous electrolyte battery can be used with guarantees of safety and is a value specific to each nonaqueous electrolyte battery. The maximum usage voltage is, for example, a voltage described in the specifications of a nonaqueous electrolyte battery as "charge voltage", "maximum safety voltage" or the like. The "final discharge voltage" is the lowest usage voltage at which the nonaqueous electrolyte battery can be used while suppressing an overdischarge of both of the positive electrode and the negative electrode, that is, suppressing the degradation of the nonaqueous electrolyte battery. The final discharge voltage is a value specific to each nonaqueous electrolyte battery.

A discharge capacity $D_C$ of the positive electrode is a discharge capacity per 1 cm$^2$ of a portion of the positive electrode layer opposed to the negative electrode layer. A discharge capacity $D_A$ is a discharge capacity per 1 cm$^2$ of a portion of the negative electrode layer opposed to the positive electrode layer.

The discharge capacity $D_C$ of the positive electrode can be measured by, for example, the following procedure.

First, a nonaqueous electrolyte battery according to this embodiment is fully charged. The nonaqueous electrolyte battery can fully be charged by, for example, charging the nonaqueous electrolyte battery up to the maximum usage voltage with a constant current at the rate of 0.05 C and at 25°C and then with a constant voltage until the current value becomes 0.01 C.

Next, the nonaqueous electrolyte battery is disassembled and the electrode group is taken out. And then, a plate-like first positive electrode sample having a square-plane shape of 1 cm square is cut out from a portion of the positive electrode which the positive electrode layer and the negative electrode layer are opposed each other in the electrode group taken out of the disassembled battery. A first three-pole type cell is produced by using the first positive electrode sample as a working electrode and an Li metal as a counter electrode. The structure of a first three-pole cell will be described in detail later.

The produced first three-pole cell is subjected to discharge at 25°C at the rate of 0.05 C until the potential of the working electrode reaches 3.0 V (vs. Li/Li$^+$). The quantity of electricity that can be discharged by the discharge is measured. The measured quantity of electricity is the discharge capacity $D_C$ of the positive electrode.

The discharge capacity $D_A$ of the negative electrode can be measured by, for example, the following procedure.

First, a plate-like first negative electrode sample having a square-plane shape of 1 cm square is cut out from a portion of the negative electrode where the positive electrode layer and the negative electrode layer are opposed each other in the electrode group taken out of the disassembled battery to obtain the discharge capacity $D_C$ of the positive electrode. A second three-pole cell is produced by using the first negative electrode sample as a working electrode and an Li metal as a counter electrode. The structure of a second three-pole cell will be described in detail later.

The produced second three-pole cell is subjected to discharge at 25°C at the rate of 0.05 C until the potential of the working electrode reaches 2.0 V (vs. Li/Li$^+$). The quantity of electricity that can be discharged by the discharge is measured. The measured quantity of discharge is the discharge capacity $D_A$ of the negative electrode.

A low rate of charge/discharge is used to measure the discharge capacity B, the discharge capacity $D_C$, and the discharge capacity $D_A$ because a discharge capacity close to a potential discharge capacity of the nonaqueous electrolyte battery, the positive electrode, or the negative electrode is thereby measured by reducing the influence of battery internal resistance and the like.

The area S is an area of the negative electrode layer and the positive electrode layer involved in a charge/discharge reaction of the nonaqueous electrolyte battery. That is, $(D_A - D_C) \times S$ means a difference between discharge capacity of the negative electrode and the discharge capacity of the positive electrode involved in a charge/discharge reaction of the nonaqueous electrolyte battery according to this embodiment.

The area S of a nonaqueous electrolyte battery including an electrode group in a coiled structure can be measured by, for example, the following method.

First, the nonaqueous electrolyte battery is disassembled and an electrode group is taken out.

Next, by observing the section of the electrode group taken out of the battery using X-ray CT, the total of the length of the opposed portions in the direction parallel to the coiling axis and the total of the length of the opposed portions in the direction perpendicular to the coiling axis can be measured.

The area S of the nonaqueous electrolyte battery can be calculated by multiplying the total of length of the opposed portions parallel to the coiling axis and the total of the length of the opposed portions perpendicular to the coiling axis.

The discharge capacity B of the nonaqueous electrolyte battery is used to normalize the difference in discharge capacity $(D_A - D_C) \times S$. A nonaqueous electrolyte battery whose value obtained by dividing the difference in discharge capacity $(D_A - D_C) \times S$ by the discharge capacity B is in the range of -0.07 or more but 0.05 or less can present an excellent cycle life for the following reason.

During a battery is charged/discharged, the difference in potential between the positive electrode and the negative electrode means the voltage of the battery. Thus, even if the final discharge voltage of a battery is fixed, the final discharge potential of the positive electrode varies depending on the potential of the negative electrode. Therefore, there is a possibility of an overdischarge of the positive electrode because the positive electrode potential can become too base. The overdischarge of the positive electrode could cause the rise in resistance or the degradation of capacity and thus, measures discussed above such as a method of preventing overdischarge by a secondary device such as a protection element or protection circuit, a method of using a sub-active material for the negative electrode, and a method of raising the final discharge voltage have been taken. However, these methods decrease the rated capacity and, for example, the driving range of an electric car could be reduced.

The inventors found that the cause of an overdischarge of the positive electrode in a nonaqueous electrolyte battery using a negative electrode containing titanium and a positive electrode containing nickel is, as will be described below, mainly a difference of initial charge/discharge efficiency between a negative active material and a positive active material.

A negative active material containing titanium, for example, lithium-titanium composite oxide can exhibit better initial charge/discharge efficiency than a positive active material containing nickel. Thus, in such a battery, the negative electrode can have a higher discharge capacity than that of the positive electrode. The negative electrode having a discharge capacity higher than that of the positive electrode does not reach a final discharge state even if the positive electrode is in the final discharge state. The final discharge state of the positive electrode is a state in which the potential of the positive electrode is falling rapidly. Therefore, if the discharge of the battery continues from this state until the negative electrode reaches the final discharge state, the potential of the positive electrode becomes more base, leading to an overdischarge state of the positive electrode.

As a result of intensive research, the inventors found that by decreasing the difference of discharge capacities between the positive electrode and the negative electrode of a nonaqueous electrolyte battery, more specifically, by decreasing the difference of discharge capacities between the positive electrode and the negative electrode so that the value obtained by dividing the difference in discharge capacity $(D_A - D_C) \times S$ of the nonaqueous electrolyte battery by the discharge capacity B falls within the range of -0.07 or more but 0.05 or less, the potential of the negative electrode at the end of discharge of the battery can be made more noble than when the difference of discharge capacities between the positive electrode and the negative electrode is not decreased, thereby making the potential of the positive electrode more noble at the end of discharge of the battery.

In such a nonaqueous electrolyte battery, when the positive electrode reaches the final discharge state, the negative electrode is close to the final discharge state or has reached the final discharge state. Thus, regardless of the potential of the negative electrode, the voltage of the nonaqueous electrolyte battery can reach the final discharge voltage before the potential of the positive electrode becomes too base. By stopping the discharge of the nonaqueous electrolyte battery when the final discharge voltage is reached, the positive electrode potential can be prevented from becoming too base, that is, an overdischarge of the positive electrode can be prevented. Thus, a nonaqueous electrolyte battery according to this embodiment can also prevent the positive electrode potential from becoming too base at the end of the discharge, and therefore, the degradation of the positive electrode can be prevented without raising the final discharge voltage, and therefore, an excellent cycle life can be exhibited.

Next, the difference of a discharge capacity of the negative electrode and a discharge capacity of the positive electrode of a nonaqueous electrolyte battery according to this embodiment will be described in detail with reference to the drawings.

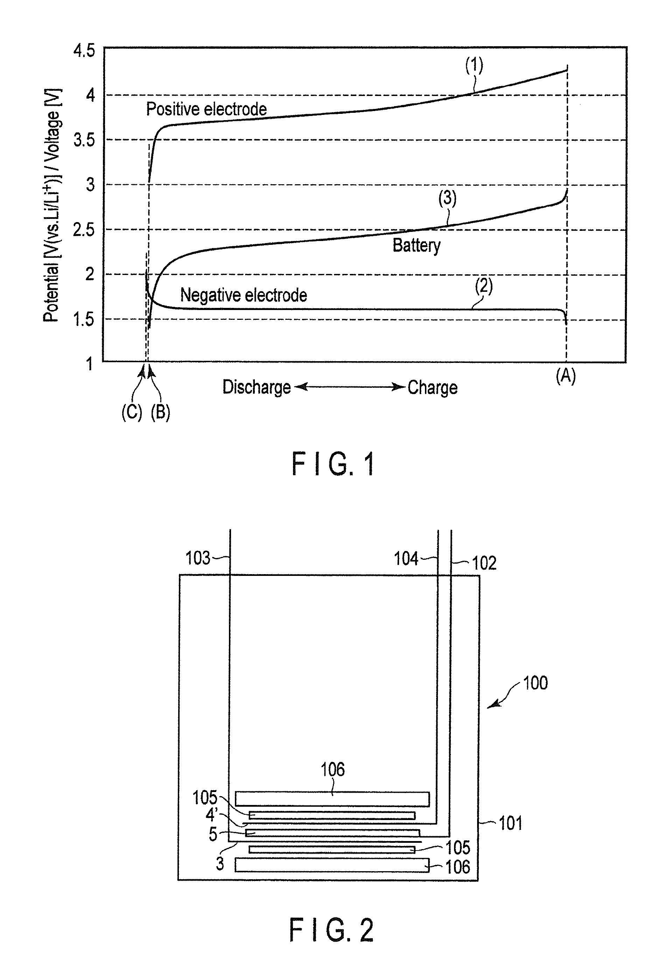

FIG. 1 is a graph schematically showing charge and discharge curves of an example of nonaqueous electrolyte battery according to this embodiment;

The horizontal axis of FIG. 1 represents the capacity of the nonaqueous electrolyte battery, the positive electrode, and the negative electrode of this example. A capacity (A) indicates a capacity of the nonaqueous electrolyte battery in this example in a fully charged state.

A curve (1) in FIG. 1 schematically shows the potential of the positive electrode of the nonaqueous electrolyte battery in this example as a function of the capacity of the nonaqueous electrolyte battery of this example. The curve (1) can be obtained by plotting the potential of the first positive electrode sample with respect to the capacity in a discharge test performed to measure the discharge capacity $D_C$ described above. In the discharge test whose result is shown in the curve (1), the discharge was started from the capacity (A) corresponding to the fully charged state. And then, when the capacity fallen to a capacity (B), the potential of the positive electrode fallen to 3.0 V (vs. Li/Li$^+$). Thus, the capacity obtained by subtracting the capacity (B) from the capacity (A) is the discharge capacity $D_C$ of the positive electrode.

A curve (2) in FIG. 1 schematically shows changes of the potential of the negative electrode as a function of the capacity of the nonaqueous electrolyte battery in this example. The curve (2) can be obtained by plotting the potential of the first negative electrode sample with respect to the capacity in a discharge test performed to measure the discharge capacity $D_A$ described above. In the discharge test whose result is shown in the curve (2), the discharge was started from the capacity (A) corresponding to the fully charged state. And then, when the capacity fallen to a capacity (C), the potential of the negative electrode risen to 2.0 v (vs. Li/Li$^+$). Thus, the capacity obtained by subtracting the capacity (C) from the capacity (A) is the discharge capacity $D_A$ of the negative electrode.

A curve (3) in FIG. 1 schematically shows the voltage of the nonaqueous electrolyte battery as a function of the capacity of the nonaqueous electrolyte battery in this example. The curve (3) can be obtained by plotting what is obtained by subtracting the negative electrode potential from the positive electrode potential for each capacity with respect to the capacity.

As is evident from FIG. 1, the capacity (B) and the capacity (C) are very close to each other. That is, in the nonaqueous electrolyte battery in this example, there is no big difference between the discharge capacity $D_C$ of the positive electrode and the discharge capacity $D_A$ of the negative electrode. More specifically, the value obtained by multiplying the difference in discharge capacity ($D_A$-$D_C$) by the area S of a portion of the negative electrode layer opposed to the positive electrode layer in the nonaqueous electrolyte battery and dividing by the discharge capacity B of the nonaqueous electrolyte battery described above is in the range larger than 0 but equal to 0.05 or less.

In the nonaqueous electrolyte battery of this example whose discharge curve is shown in FIG. 1, there is no big difference between the discharge capacity $D_C$ of the positive electrode and the discharge capacity $D_A$ of the negative electrode and, as shown in FIG. 1, when the positive electrode falls to 3.0 (vs. Li/Li$^+$) to reach the final discharge state, the negative electrode is in the state where the potential of the negative electrode is increasing rapidly, that is, the negative electrode is close to the final discharge state. Thus, when the capacity of the nonaqueous electrolyte battery reaches the capacity (B), the potential difference between the positive electrode and the negative electrode, that is, the voltage of the nonaqueous electrolyte battery in this example decreases rapidly. That is, regardless of the potential of the negative electrode, the voltage of the nonaqueous electrolyte battery in this example can reach the final discharge voltage before the potential of the positive electrode becomes too base. By stopping the discharge of the nonaqueous electrolyte battery when the final discharge voltage is reached, that is, the capacity falls to the capacity (B), the positive electrode potential can be prevented from becoming too base, that is, an overdischarge of the positive electrode can be prevented.

In a nonaqueous electrolyte battery for which ($D_A$-$D_C$) × S/B in the formula (1) is larger than 0.05, the difference between the capacity (B) and the capacity (C) is too large, and when the nonaqueous electrolyte battery reaches the capacity (B), that is, the positive electrode reaches the final discharge state, the negative electrode is not close to the final discharge state. Thus, the voltage of such a nonaqueous electrolyte battery does not reach the final discharge voltage even if the capacity (B) is reached. Such a nonaqueous electrolyte battery cannot stop the discharge by using the final discharge voltage as a guide. If the discharge is not stopped when the capacity (B) is reached and a further discharge of the nonaqueous electrolyte battery is allowed, the potential of the positive electrode becomes more base, leading to an overdischarge state of the positive electrode.

On the other hand, in a nonaqueous electrolyte battery for which ($D_A$ - $D_C$) × S/B in the formula (1) is less than - 0.07, the capacity (C) is too large for the capacity (B). That is, if such a nonaqueous electrolyte battery is discharged until the capacity (C) is reached, the negative electrode reaches the final discharge state, but the positive electrode is not close to the final discharge state. Thus, the voltage of such a nonaqueous electrolyte battery does not reach the final discharge voltage even if the capacity (C) is reached. Such a nonaqueous electrolyte battery cannot stop the discharge by using the final discharge voltage as a guide. If the discharge is not stopped when the capacity (C) is reached and a further discharge of the nonaqueous electrolyte battery is allowed, the potential of the negative electrode becomes more noble, leading to an overdischarge state of the negative electrode.

Also, in a nonaqueous electrolyte battery for which ($D_A$ - $D_C$) × S/B in the formula (1) is less than -0.07, the final discharge voltage is reached at the capacity (C), which is considerably larger than the capacity (B) corresponding to the final discharge state of the positive electrode. Thus, such a nonaqueous electrolyte battery has a low rated capacity.

In a nonaqueous electrolyte battery according to this embodiment, a charge capacity $C_C$ of the positive electrode and a charge capacity $C_A$ of the negative electrode preferably satisfy the relation (2): $0.8 \leq C_C/C_A \leq 1.2$. A nonaqueous electrolyte battery according to this embodiment for which the charge capacity $C_C$ of the positive electrode and the charge capacity $C_A$ of the negative electrode satisfy the above relation can prevent the potential of the negative electrode at the end of the charge from becoming too base and also more excellent cycle characteristics can be exhibited.

The charge capacity $C_C$ of the positive electrode can be measured by the following procedure.

First, after obtaining the discharge capacity $D_C$ by using the first three-pole cell produced to measure the discharge capacity $D_C$ of the positive electrode, the first three-pole cell is charged up to 4.2 V (vs. Li/Li$^+$) with a constant current at the rate of 0.05 C. Further, the first three-pole cell is charged with a constant voltage until the current value becomes 0.01 C. The quantity of electricity that can be charged by the charge means the charge capacity $C_C$ of the positive electrode.

The charge capacity $C_A$ of the negative electrode can be measured by the following procedure.

First, after obtaining the discharge capacity $D_A$ by using the second three-pole cell produced to measure the discharge capacity $D_A$ of the negative electrode, the second three-pole cell is charged up to 1.4 V (vs. Li/Li$^+$) with a constant current at the rate of 0.05 C. Further, the second three-pole cell is charged with a constant voltage until the current value becomes 0.01 C. The quantity of electricity that can be charged by the charge means the charge capacity $C_A$ of the negative electrode.

A nonaqueous electrolyte battery according to this embodiment is particularly preferably such that when the potential of the positive electrode becomes 3.4 V (vs. Li/Li$^+$) during the nonaqueous electrolyte battery is discharged at the rate of 0.05 C, the potential of a closed circuit of the negative electrode is 1.6 V (vs. Li/Li$^+$) or more but 2.5 V (vs. Li/Li$^+$) or less. Such a nonaqueous electrolyte battery can further prevent the potential of the positive electrode from becoming too base at the final discharge voltage and also prevent the potential of the negative electrode from becoming too noble. That is, such a nonaqueous electrolyte battery can further prevent the positive electrode and the negative electrode from becoming overdischarged.

The potential of a closed circuit of the negative electrode when the potential of the positive electrode becomes 3.4 V (vs. Li/Li$^+$) can be measured by, for example, the following procedure.

First, a plate-like second positive electrode sample and a plate-like second negative electrode sample having a square-plane shape of 1 cm square are cut out of a portion of the positive electrode and a portion of the negative electrode where the positive electrode layer and the negative electrode layer are opposed each other in the electrode group taken out of the battery disassembled to obtain the discharge capacity $D_C$ of the positive electrode. A third three-pole cell is produced by using the second positive electrode sample as a working electrode, the second negative electrode sample as a counter electrode, and an Li metal as a reference electrode. The structure of a third three-pole cell will be described in detail later.

The produced third three-pole cell is discharged at the rate of 0.05 C. By monitoring the potentials of the working electrode and the counter electrode with respect to the reference electrode during the discharge, the potential of the closed circuit of the negative electrode when that of the positive electrode reaches 3.4 V (vs. Li/Li$^+$) can be measured.

Next, an example of the specific method of making the difference between the discharge capacity of the positive electrode and that of the negative electrode of a nonaqueous electrolyte battery smaller will be described.

A negative active material containing titanium can have a faster self-discharge speed than a positive active material containing nickel. By using this property, the difference between the discharge capacity of the positive electrode and that of the negative electrode of a nonaqueous electrolyte battery can be made smaller.

For example, the self-discharge of the negative electrode can be promoted by producing a nonaqueous electrolyte battery and storing the nonaqueous electrolyte battery in an atmosphere of high temperature after the initial charge or the subsequent charge, for example, the charge before shipment. Accordingly, the discharge capacity of the negative electrode can be reduced. On the other hand, a positive active material containing nickel has a slower self-discharge speed than a negative active material containing titanium and thus, the change of the discharge capacity of the positive electrode is much smaller than that of the negative electrode. Thus, due to storage in an atmosphere of high temperature, the difference of discharge capacities of the positive electrode and the negative electrode of a nonaqueous electrolyte battery can be made smaller. The atmosphere of storage may be air or a reducing atmosphere such as an inert gas. The temperature condition of the high-temperature atmosphere can be set to a range of, for example, 55°C or more but 100°C or less. The storage time may be in the range of, for example 5 to 200 hours.

Alternatively, a method of designing a nonaqueous electrolyte battery such that a coat is formed on the surface of the negative electrode during charge/discharge can be cited.

If, for example, the nonaqueous electrolyte contains boron, the negative active material containing titanium can react with boron in the nonaqueous electrolyte to form a coat on the surface of the negative electrode. The discharge of the negative electrode is needed to form a coat on the surface. Thus, the discharge capacity of the negative electrode can be reduced by forming a coat on the surface of the negative electrode. As a result, the difference between the discharge capacity of the positive electrode and that of the negative electrode of a nonaqueous electrolyte battery can be made smaller.

A nonaqueous electrolyte battery according to this embodiment preferably contains boron in the quantity of 0.01 to 3 mg per 1 g of the nonaqueous electrolyte. A battery according to this embodiment in which the nonaqueous electrolyte contains a quantity of boron in this range can form a coat exhibiting an excellent resistance on the negative electrode, which is also enough to reduce the discharge capacity of the negative electrode.

The coat formed on the surface of the negative electrode can also work as a protective coat of the negative electrode. Thus, a nonaqueous electrolyte battery according to this embodiment in which the nonaqueous electrolyte contains boron can exhibit a more excellent cycle life.

The amount of boron in the nonaqueous electrolytic solution can be examined by inductively coupled plasma-atomic emission spectroscopy, mass spectrometry or the like.

Next, examples of the respective configurations of the first three-pole cell to measure the discharge capacity $D_C$ and the charge capacity $C_C$ of the positive electrode, the second three-pole cell to measure the discharge capacity $D_A$ and the charge capacity $C_A$ of the negative electrode, and the third three-pole cell to measure the potential of a closed circuit of the negative electrode when the potential of a closed circuit of the positive electrode becomes 3.4 V (vs. Li/Li$^+$) will be described.

FIG. 2 is a schematic sectional view of an exemplary first three-pole cell produced to measure the discharge capacity $D_C$ of the positive electrode of the nonaqueous electrolyte battery according to this embodiment.

A first three-pole cell 100 shown in FIG. 2 includes a working electrode 103 and a counter electrode 104. The working electrode 103 includes a plate-like first positive electrode sample 3 having a square-plane shape of 1 cm square obtained by cutting out of the positive electrode at a portion of the electrode group where the positive electrode layer and the negative electrode layer are opposed each other in the electrode group after the nonaqueous electrolyte battery is fully charged. The first positive electrode sample 3 has the positive electrode layer (not shown) formed only on one surface.

The counter electrode 104 includes an Li metal 4.

The first three-pole cell 100 further includes a reference electrode 102. The reference electrode 102 contains the metal lithium (not shown).

The reference electrode 102 is connected to a separator 5. The separator 5 is not particularly limited and, for example, a fine porous film, woven fabric, unwoven fabric, or a laminated material of the same material or different materials thereof can be used. The separator 5 is arranged between the positive electrode layer of the first positive electrode sample 3 and the Li metal 4'.

The first three-pole cell 100 further includes two glass filters 105 and two polypropylene plates (PP plates) 106.

The working electrode 103 is arranged between the separator 5 and one glass filter 105. The counter electrode 104 is arranged between the separator and the other glass filter 105.

The one glass filter 105 is arranged between the working electrode 103 and one PP plate 106. The other glass filter 105 is arranged between the counter electrode 104 and the other PP plate 106.

The working electrode 103, the counter electrode 104, the separator 5, the two glass filters 105 and two PP plates 106 are housed in a container 101 made of glass. The container 101 made of glass further houses a nonaqueous electrolyte (not shown). The working electrode 103, the counter electrode 104, the separator 5, the two glass filters 105, and the two PP plates 106 are immersed in the nonaqueous electrolyte. A nonaqueous electrolyte prepared by dissolving an electrolyte (for example, lithium salt) in a nonaqueous solvent can be used as the nonaqueous electrolyte.

A three-pole cell of the same structure as the first three-pole cell shown in FIG. 1 as an example excluding the following point can be used as the second three-pole cell. That is, in the second three-pole cell, the working electrode 103 including a plate-like first positive electrode sample having a square-plane shape of 1 cm square obtained by cutting out of the negative electrode at a portion of the electrode group where the positive electrode layer and the negative electrode layer are opposed each other in the electrode group after the nonaqueous electrolyte battery is fully charged is used.

A three-pole cell of the same structure as the first three-pole cell shown in FIG. 1 as an example excluding the following point can be used as the third three-pole cell. That is, in the third three-electrode cell, the counter electrode 104 including a plate-like second negative electrode sample having a square-plane shape of 1 cm square obtained by cutting out the negative electrode at a portion of the electrode group where the positive electrode layer and the negative electrode layer are opposed each other in the electrode group after the nonaqueous electrolyte battery is fully charged is used.

Next, the structure of a nonaqueous electrolyte battery according to this embodiment will be described in more detail.

A nonaqueous electrolyte battery according to this embodiment includes an electrode group. The electrode group contains a positive electrode and a negative electrode.

The positive electrode includes a positive electrode layer. The positive electrode layer contains nickel in the quantity of 12 wt% or more but 34 wt% or less.

The positive electrode layer can further include a conductive material and/or a binder. The conductive material can be mixed to improve current-collecting performance and also to inhibit contact resistance between a positive active material and a positive current collector. The binder can be mixed to close a gap of dispersed positive active materials and also to bind the positive active material and the positive current collector.

The positive electrode can further include, for example, a strip positive current collector. The positive electrode layer may be formed on both surfaces or one surface of the positive current collector. The positive current collector can include a portion having no positive electrode layer formed on the surface and the portion can work as a positive current-collecting tab.

The negative electrode includes the negative electrode layer. At least a portion of the negative electrode layer is opposed to the positive electrode layer. The negative electrode layer contains titanium in the quantity of 39 wt% or more but 51 wt% or less.

The negative electrode layer can further include a conductive material and/or a binder. The conductive material can be mixed to improve current-collecting performance and also to inhibit contact resistance between a negative active material and a negative current collector. The binder can be mixed to close a gap of dispersed negative active materials and also to bind the negative active material and the negative current collector.

The negative electrode can further include, for example, a strip negative current collector. The negative electrode layer may be formed on both surfaces or one surface of the negative current collector. The negative current collector can include a portion having no negative electrode layer formed on the surface and the portion can work as a negative current-collecting tab.

The electrode group can further include a separator. The separator can be provided between the positive electrode layer and the negative electrode layer.

The electrode group can have a so-called laminated structure in which the positive electrode, the separator, and the negative electrode are stacked. Alternatively, the electrode group may have a so-called coiled structure in which an assembly, which is formed by stacking the positive electrode, the separator and the negative electrode, is coiled.

A nonaqueous electrolyte battery according to this embodiment further includes a nonaqueous electrolyte. The nonaqueous electrolyte is held by the electrode group.

A nonaqueous electrolyte battery according to this embodiment can further include an exterior member. The exterior member can accommodate the electrode group and the nonaqueous electrolyte therein.

The exterior member can contain a container and a sealing body. The sealing body is provided with an inlet. The inlet can be sealed with a sealing member after the nonaqueous electrolyte is injected.

The exterior member can also include, for example, a positive terminal and a negative terminal at the sealing body. The positive terminal can electrically be connected to the positive current collecting tab of the positive electrode contained in the electrode group. The negative terminal can electrically be connected to the negative current collecting tab of the negative electrode contained in the electrode group.

A positive lead may be connected to between the positive terminal and the positive current collecting tab. Similarly, a negative lead may be connected to between the negative terminal and the negative current collecting tab.

An insulating member may be provided between the positive terminal and/or the negative terminal and the sealing body.

Next, the positive electrode, the negative electrode, the separator, the nonaqueous electrolyte, and the exterior member that can be used in a nonaqueous electrolyte battery according to this embodiment will be described in more detail.

(1) Positive electrode

A material containing nickel is used as a positive active material. By using a material containing nickel, the positive electrode layer contains nickel in the quantity of 12 wt% or more but 34 wt% or less. The content of nickel in the positive electrode layer can be examined by the inductively coupled plasma-atomic emission spectroscopy, mass spectrometry or the like.

Preferable positive electrode active materials include, for example, lithium-containing nickel-cobalt-manganese oxide (for example, $Li_{1-x}Ni_{1-a-b-c}Co_aMn_bM1_cO_2$ (M1 is at least one metal selected from Mg, Al, Si, Ti, Zn, Zr, Ca, and Sn, $-0.2 < x < 0.5$, $0 < a < 0.5$, $0 < b < 0.5$, and $0 \leq c < 0.1$)).

The positive electrode layer can contain two positive active materials or more. As a further positive active materials, for example, various oxides, for example, lithium-containing cobalt oxide (for example, $LiCoO_2$), manganese dioxide, lithium-manganese composite oxide (for example, $LiMn_2O_4$ or $LiMnO_2$), lithium-containing nickel oxide (for example, $LiNiO_2$), lithium-containing nickel-cobalt oxide (for example, $LiNi_{0.8}Co_{0.2}O_2$), lithium-containing iron oxide, lithium-containing vanadium oxide, and chalcogen compounds such as titanium disulfide and molybdenum disulfide can be included.

As the conductive material for the positive electrode layer, for example, acetylene black, carbon black, artificial graphite, or natural graphite can be used.

As the binder for the positive electrode layer, for example, polytetrafluoroethylene (PTFE), polyvinylidene fluoride (PVdF), modified PVdF in which at least one atom of hydrogen or fluorine in PVdF has been substituted by a substituent group, copolymer of vinylidene fluoride-propylene hexafluoride, and terpolymer of vinylidene fluoride-tetrafluoroethylene-propylene hexafluoride can be included.

The positive current collector can be formed from, for example, metal foil. As the material of the metal foil that can form a positive current collector, for example, aluminum or aluminum alloy can be used.

The positive electrode can be manufactured, for example, as described below.

First, positive-electrode slurry is prepared by introducing a positive electrode active material and optionally a conductive material and a binder into an appropriate solvent, for example, N-methylpyrolidone and suspending them in the solvent.

When preparing the positive electrode slurry, it is preferable to set the mixing ratio of the positive electrode active material, the conductive material, and the binder in the range of 75 to 96% by mass for the positive electrode active material, 3 to 20% by mass for the conductive material, and 1 to 7% by mass for the binder.

The positive current collector is coated with the slurry obtained as described above. Then, the coated slurry is dried and next, for example, rolled using a roll press or the like.

In this manner, the positive electrode including the positive current collector and the positive electrode layer formed on the positive current collector are obtained.

(2) Negative electrode

A material containing titanium is used as a negative active material. By using a material containing titanium, the negative electrode layer contains titanium in the quantity of 39 wt% or more and 51 wt% or less. The content of titanium in the negative electrode layer can be examined by the inductively coupled plasma-atomic emission spectroscopy, mass spectrometry or the like.

Preferable negative active materials include lithium-titanium composite oxide, for example, spinel-type lithium titanate. A nonaqueous electrolyte battery according to this embodiment including a negative electrode containing lithium-titanium composite oxide can exhibit a longer life. Thus, a nonaqueous electrolyte battery according to this embodiment including a negative electrode containing lithium-titanium composite oxide can exhibit a more excellent cycle life.

The negative electrode layer can contain two negative active materials or more. As a further negative active materials, for example, a graphite material or carbonaceous material (for example, graphite, coke, carbon fiber, spherical carbon, carbonaceous material obtained by the pyrolytic of the gaseous carbonaceous substance, resin baked material and the like), chalcogen compound (for example, titanium disulfide, molybdenum disulfide, niobium selenide and the like), and light metal (for example, aluminum, aluminum alloy, magnesium alloy, lithium, lithium alloy and the like) can be included.

As a conductive material for the negative electrode layer, a carbon material can be used. Examples of the carbon material include acetylene black, coke, carbon fiber, and graphite.

As the binder for the negative electrode layer, for example, polytetrafluoroethylene (PTFE), polyvinylidene fluoride (PVdF), ethylene-propylene-diene copolymer (EPDM), stylene-butadiene rubber (SBR), carboxymethylcellulose (CMC) or the like can be used.

The negative electrode can be manufactured, for example, as described below.

First, a negative electrode slurry is prepared by introducing a negative electrode active material and a binder and, if necessary, a conductive material into a general solvent, for example, N-methylpyrolidone and suspending them in the solvent.

When preparing a slurry, it is preferable to mix the negative electrode active material, the conductive material, and the binder in the ratio of 70 to 96% by mass, 2 to 20% by mass, and 2 to 10% by mass respectively. By setting the quantity of the conductive material to 2% by mass or more, the current-collecting performance of the negative electrode layer can be improved. Also, by setting the quantity of the binder to 1% by mass or more, the binding property of the negative electrode layer and the negative current collector can be enhanced so that excellent cycle characteristics can be expected. On the other hand, it is preferable to set each of the conductive material and the binder to 16% by mass or less to achieve higher capacity.

The negative current collector is coated with the slurry obtained as described above. Then, the slurry with which the negative current collector is coated is dried and then, for example, pressed using a roll press or the like.

In this manner, the negative electrode including the negative current collector and the negative electrode layer formed on the negative current collector are obtained.

(3) Separator

The separator includes, not particularly limited, a fine porous film, woven fabric, unwoven fabric, or a laminated material of the same material or different materials thereof can be used. Materials for forming the separator include polyethylene, polypropylene, ethylene-propylene copolymer, ethylene-butene copolymer, and cellulose.

(4) Nonaqueous electrolyte

The nonaqueous electrolyte can be prepared by dissolving an electrolyte, for example, lithium salt in a nonaqueous solvent.

A nonaqueous solvent that can be used includes, for example, ethylene carbonate (EC), propylene carbonate (PC), butylene carbonate (BC), dimethyl carbonate (DMC), diethyl carbonate (DEC), ethylmethyl carbonate (EMC), γ-butyrolactone (γ-BL), sulfolane, acetonitrile, 1,2-dimethoxy-ethane, 1,3-dimethoxy-propane, dimethyl ether, tetrahydrofuran (THF), and 2-methyltetrahydrofuran. The nonaqueous solvent may be used alone or two or more nonaqueous solvents may be used as a mixture.

Electrolytes that can be used include, for example, lithium salts such as lithium perchlorate ($LiClO_4$), lithium hexafluorophosphate ($LiPF_6$), lithium tetrafluoroborate ($LiBF_4$), lithium hexafluoroarsenide ($LiAsF_6$), and lithium trifluoromethanesulfonate ($LiCF_3SO_3$). As described above, the nonaqueous electrolyte preferably contains boron. Thus, it is preferable to use an electrolyte containing boron such as lithium tetrafluoroborate as the electrolyte. The electrolyte may be used alone or two or more electrolytes may be used as a mixture. It is preferable to set the concentration of the electrolyte in the nonaqueous solvent in the range of 0.2 mol/L to 3 mol/L. The concentration within the above range can provide sufficient ionic conductivity and allow the electrolytic solution to sufficiently dissolve the electrolyte.

(5) Exterior member

As materials of the container, sealing body, and inlet as exterior members, for example, aluminum, aluminum alloy, iron (Fe), iron plated with nickel (Ni), stainless steel (SUS) or the like can be used. That is, a nonaqueous electrolyte battery according to this embodiment may be a can-type battery.

Alternatively, the container, the sealing body, and the inlet as exterior members may be made of a laminate of the above metals and resin. That is, a nonaqueous electrolyte battery according to this embodiment may be a laminate-type battery.

The shape of the exterior member may take various forms in accordance with applications of the nonaqueous electrolyte battery according to this embodiment and is not particularly limited.

It is desirable to form the positive terminal, the negative terminal, the positive lead, and the negative lead from, for example, aluminum or aluminum alloy.

Any resin resistant to an electrolytic solution can be used as a resin used as an insulating member that can be provided between the positive terminal and/or negative terminal and the sealing body. For example, polyethlene, polypropylene, ethylene vinyl acetate copolymer, ethylene vinyl alcohol acetate copolymer, ethylene-acrylic acid copolymer, ethylene-ethyl acrylate copolymer, ethylene-methacryl acrylate copolymer, ethylene-methylmethacrylate copolymer, ionomer, polyacrylonitrile, polyvinylidene chloride, polytetrafluoroethylene, polychlorotrifluoroethylene, polyphenylene ether, polyethylene terephthalate, polytetrafluoroethylene or the like can be used. One of the above resins may be used alone or a plurality of resins may be used as a mixture. Among these, it is preferable to use polypropylene or polyethylene.

Next, an exemplary nonaqueous electrolyte battery according to this embodiment will be described with reference to the drawings.

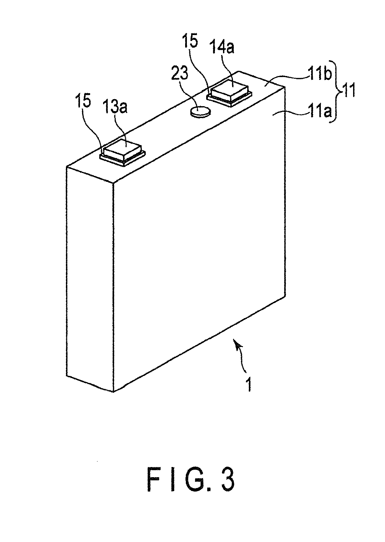

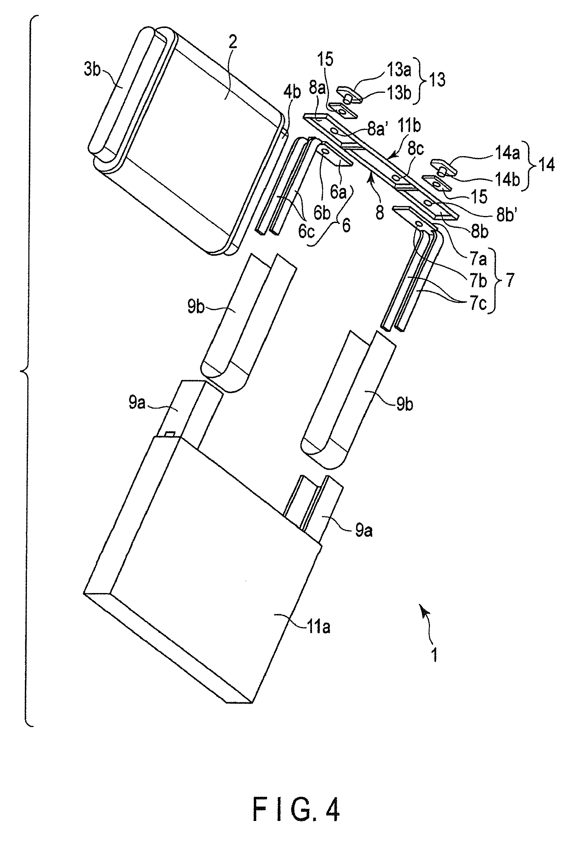

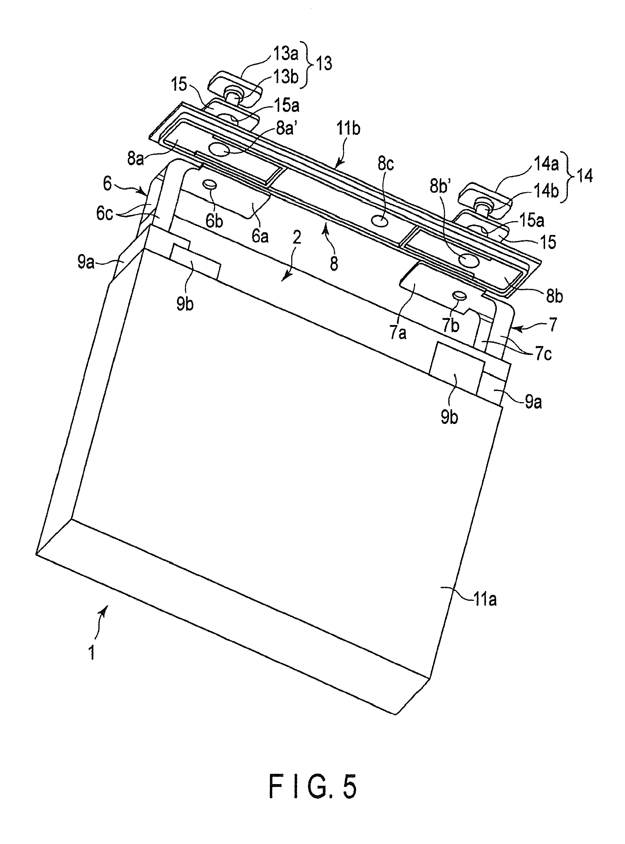

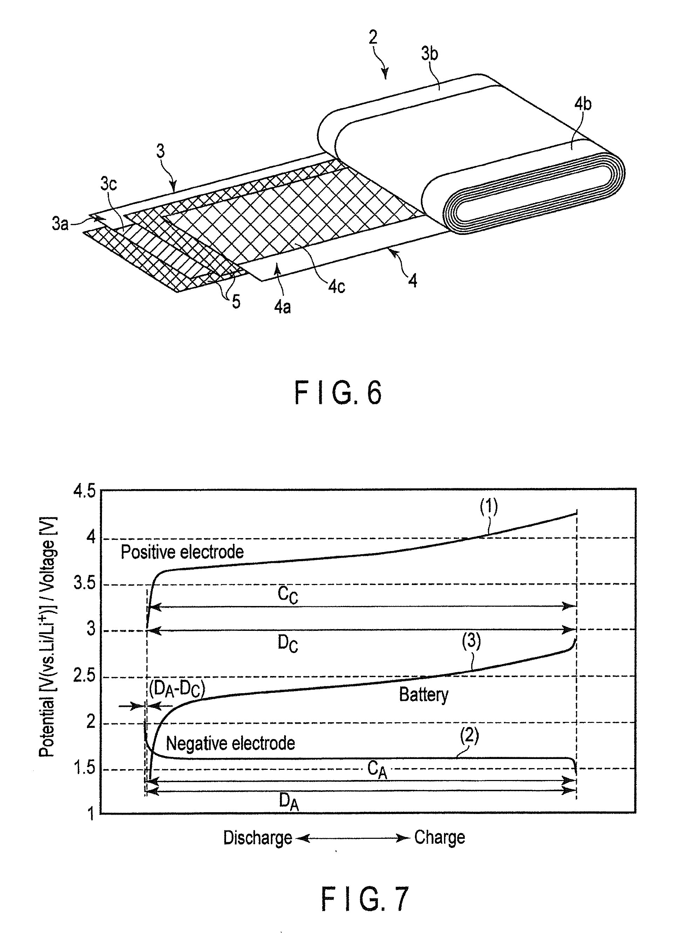

FIG. 3 is a schematic perspective view of an exemplary nonaqueous electrolyte battery according to this embodiment. FIG. 4 is a schematic exploded perspective view of the nonaqueous electrolyte battery shown in FIG. 3. FIG. 5 is a further schematic exploded perspective view of the nonaqueous electrolyte battery shown in FIG. 3. FIG. 6 is a schematic partially developed perspective view of an electrode group included in the nonaqueous electrolyte battery shown in FIG. 3.

As shown in FIGS. 3 to 5, the nonaqueous electrolyte battery 1 in this example is an angular nonaqueous electrolyte battery including an exterior member 11, an electrode group 2 housed in the exterior member 11, and a nonaqueous electrolytic solution (not shown) with which the electrode group 2 is impregnated.

As shown in FIGS. 3 to 5, the exterior member 11 includes a metal-made container 11a in a closed-end rectangular tubular shape having an opening, and a sealing body 11b in a rectangular-plate shape arranged in the opening of the container 11a. The sealing body 11b is welded to the opening of the container 11a by welding, for example, laser welding. The sealing body 11b has two through holes (not shown) and an inlet (not shown) opened therein.

As shown in FIGS. 4 and 6, the electrode group 2 has a flat shape. As shown in FIG. 6, the electrode group 2 is in a state the sheet-like positive electrode 3 and the sheet-like negative electrode 4 are coiled with the separators 5 sandwiched therebetween. After, for example, the positive electrode 3 and the negative electrode 4 are coiled with the separators 5 sandwiched therebetween, the electrode group 2 is formed by being pressurized as a whole such that the cross sectional shape thereof is a quadrangular shape corresponding to the cross sectional shape of the container 11a. The separator 5 is arranged in the outermost layer (outermost circumference) of the electrode group 2.

As shown in FIG. 6, the positive electrode 3 includes a belt-like positive current collector 3a made of metal foil, a positive current collecting tab 3b formed at one edge parallel to the long side of the positive current collector 3a, and a positive electrode layer 3c formed on the positive current collector 3a excluding at least the portion corresponding to the positive current collecting tab 3b.

As shown in FIG. 6, the negative electrode 4 includes a belt-like negative current collector 4a made of metal foil, a negative current collecting tab 4b formed at one edge parallel to the long side of the negative current collector 4a, and a negative electrode layer 4c formed on the negative current collector 4a excluding at least the portion corresponding to the negative current collecting tab 4b.

As shown in FIG. 6, the positive electrode 3, the separator 5, and the negative electrode 4 are coiled around the coiling axis of the electrode group 2 while shifting the position of the positive electrode 3 with respect to the position of the negative electrode 4 such that the positive current collecting tab 3b protrudes from the separator 5 in one direction and the negative current collecting tab 4b protrudes from the separator 5 in the opposite direction. By coiling the positive and negative electrodes as described above, as shown in FIGS. 4 and 6, the positive current collecting tab 3b protrudes from one end face of the electrode group 2 and the negative current collecting tab 4b protrudes from the other end face of the electrode group 2.

As shown in FIGS. 4 and 5, the nonaqueous electrolyte battery 1 in this example further includes a positive lead 6 and a negative lead 7.

The positive lead 6 includes a connection plate 6a having a through hole 6b and a current-collecting portions 6c extending below after branching from the connection plate 6a into two portions. Similarly, the negative lead 7 includes a connection plate 7a having a through hole 7b and a current-collecting portions 7c extending below after branching from the connection plate 7a into two portions.

As shown in FIGS. 4 and 5, an insulator 8 is arranged on the rear surface of the sealing body 11b. The insulator 8 includes a first recess 8a and a second recess 8b on the rear surface. The first recess 8a and the second recess 8b have a through hole 8a' and a through hole 8b' opened respectively therein and each of the through hole 8a' and the through hole 8b' is in communication with each of the corresponding through holes of the sealing body 11b. The connection plate 6a of the positive lead 6 is arranged inside the first recess 8a and the connection plate 7a of the negative lead 7 is arranged inside the second recess 8b. The insulator 8 has a through hole 8c in communication with the inlet of the sealing body 11b opened therein.

The positive lead 6 is joined to the outer circumference of the positive current collecting tab 3b of the electrode group 2 while sandwiching the outer circumference between the current-collecting portions 6c having two portions. The negative lead 7 is joined to the outer circumference of the negative collecting tab 4b of the electrode group 2 while sandwiching the outer circumference between the current-collecting portions 7c having the two portions. In this manner, the positive lead 6 and the positive current collecting tab 3b of the electrode group 2 are electrically connected each other and the negative lead 7 and the negative current collecting tab 4b of the electrode group 2 are electrically connected each other.

As shown in FIGS. 4 and 5, the nonaqueous electrolyte battery 1 in this example further includes two insulating members 9a. The one insulating member 9a covers a junction of the positive lead 6 and the positive current collecting tab 3b. The other insulating member 9a covers a junction of the negative lead 7 and the negative current collecting tab 4b. The two insulating members 9a are each fixed to the electrode group 2 by a folded insulating tape 9b.

As shown in FIGS. 3 to 5, the nonaqueous electrolyte battery 1 in this example further includes a positive terminal 13 and a negative terminal 14.

The positive terminal 13 includes a rectangular head 13a and a shaft portion 13b extending downward from the rear surface of the head 13a. Similarly, the negative terminal 14 includes a rectangular head 14a and a shaft portion 14b extending downward from the rear surface of the head 14a. The positive terminal 13 and the negative terminal 14 are each arranged on the top surface of the sealing body 11b via an insulating gasket 15. The shaft portion 13b of the positive terminal 13 is inserted through a through hole 15a of the insulating gasket 15, the through hole of the sealing body 11b, the through hole 8a' of the insulator 8, and the through hole 6b of the connection plate 6a of the positive lead 6 and fixed thereto by caulking. Also, the shaft portion 14b of the negative terminal 14 is inserted through the through hole 15a of the insulating gasket 15, the through hole of the sealing body 11b, the through hole 8b' of the insulator 8, and the through hole 7b of the connection plate 7a of the negative lead 7 and fixed thereto by caulking. Accordingly, the positive terminal 13 and the positive lead 6 are electrically connected and the negative terminal 14 and the negative lead 7 are electrically connected.

In the nonaqueous electrolyte battery 1 configured as described above, a nonaqueous electrolyte can be injected through the inlet opened in the sealing body 11b after the electrode group 2 is housed in the container 11a and the sealing body 11b is joined to the opening of the container 11a. After the nonaqueous electrolyte is injected, as shown in FIG. 3, the inlet is closed by a cylindrical sealing plug (for example, a rubber plug) 23 to seal the exterior member 11.

For the above nonaqueous electrolyte battery according to this embodiment, B, S, $D_C$, and $D_A$ satisfy the relation (1) : $-0.07 \leq (D_A - D_C) \times S/B \leq 0.05$. Such a nonaqueous electrolyte battery can prevent the positive electrode potential from becoming too base at the end of discharge and therefore, the degradation of the positive electrode can be prevented without raising the final discharge voltage. As a result, the nonaqueous electrolyte battery according to this embodiment can exhibit an excellent cycle life.

[Example]

The present invention will be described in more detail below by describing examples, but the present invention is not limited to the examples shown below without deviating from the spirit of the invention.

(Example 1)

In the Example 1, a nonaqueous electrolyte battery having a structure similar to that of the nonaqueous electrolyte battery 1 shown in FIGS, 3 to 6 is produced.

[Production of the positive electrode 3]

Lithium-containing nickel-cobalt-manganese oxide $LiNi_{1/3}Co_{1/3}Mn_{1/3}O_2$ and lithium-containing cobalt oxide $LiCoO_2$ are provided as positive active materials and mixed such that the ratio of $LiNi_{1/3}Co_{1/3}Mn_{1/3}O_2$ and $LiCoO_2$ is 2 : 1. The active material mixture, acetylene black, graphite, and polyvinylidene fluoride are mixed in the mass ratio of 100 : 2 : 2 : 3 and put into N-methyl-2-pyrolidone as a solvent, which is then kneaded and stirred by a planetary mixer. Thus, a positive electrode slurry is prepared.

Then, both surfaces of aluminum foil are coated with the positive electrode slurry by a coating machine to a thickness of 20 $\mu$m such that the amount of coating per unit area is 110 $g/m^2$. Next, the positive electrode slurry is dried and rolled by a roll pressing machine such that the electrode density becomes 3.4 g/cc. In this manner, the positive electrode 3 containing the positive current collector 3a and the positive electrode layer 3c formed on both surfaces of the positive current collector 3a is obtained.

Examination by the inductively coupled plasma-atomic emission spectroscopy (ICP-MS) shows that the nickel content in the positive electrode layer 3c is 12 wt%.

[Production of the negative electrode 4]

A spinel-type lithium-titanium composite oxide $Li_4Ti_5O_{12}$ is provided as a negative active material. The active material, graphite, and polyvinylidene fluoride are mixed in the mass ratio of 100 : 30 : 4 and put into N-methyl-2-pyrolidone as a solvent, which is then kneaded and stirred by a planetary mixer. Thus, a negative electrode slurry is prepared.

Then, both surfaces of aluminum foil are coated with the negative electrode slurry by a coating machine to a thickness of 20 $\mu$m such that the amount of coating per unit area is 110 $g/m^2$. Next, the slurry is dried and then rolled by a roll pressing machine such that the electrode density becomes 2.4 g/cc. In this manner, the negative electrode 4 containing the negative current collector 4a and the negative electrode layer 4c formed on both surfaces of the negative current collector 4a is obtained.

Examination by ICP-MS shows that the titanium content in the negative electrode layer 4c is 39 wt%.

[Production of the electrode group 2]

The positive electrode 3 and the negative electrode 4 produced as described above and the cellulose separator 5 of 30 $\mu$m are coiled by a coiling machine as shown in FIG. 6 and pressurized to form a flat shape. The winding stop tape is affixed to the coiled end. Thus, the production of the electrode group 2 is completed. The coating area of the positive electrode layer 3c is 15080 $cm^2$ as a total of both side and that of the negative electrode later 4c is 14090 $cm^2$.

[Production of the sealing body 11b]

As shown in FIGS. 4 and 5, the insulator 8 is arranged on the rear surface of the sealing body 11b made of aluminum. Next, the head 13a of the positive terminal 13 is arranged on the top surface of the sealing body 11b via the insulating gasket 15 and the shaft part 13b is inserted through one through hole of the sealing body 11b and the through hole 8a' of the insulator 8. Also, the head 14a of the negative terminal 14 is arranged on the top surface of the sealing body 11b via the insulating gasket 15 and the shaft part 14b is inserted through the other through hole of the sealing body 11b and the through hole 8b' of the insulator 8.

[Assembly of the battery 1]

As shown in FIGS. 4 and 5, the positive current collecting tab 3b of the electrode group 2 is welded to the positive lead 6 and the positive terminal 13 is fixed to the positive lead 6 by caulking. Similarly, the negative current collecting tab 4b of the electrode group 2 is welded to the negative lead 7 and the negative terminal 14 is fixed to the negative lead 7 by caulking. Thus, the electrode group 2 and the sealing body 11b are integrated. Next, the positive lead 6 and the positive current collecting tab 3b are covered with the one insulating member 9a and fixed by the folded insulating tape 9b. Similarly, the negative lead 7 and the negative current collecting tab 4b are covered with the other insulating member 9a and fixed by the folded insulating tape 9b.

Then, the electrode group 2 and the two insulating members 9a are inserted into the container 11a made of aluminum. Next, the sealing body 11b is welded to the opening of the container 11a by laser.

Next, a nonaqueous electrolytic solution is injected through the inlet of the sealing body 11b. A mixture of ethylene carbonate and dimethyl carbonate in the ratio of 1 : 1 is used as the nonaqueous solvent of the nonaqueous electrolytic solution and 1 mol/L of lithium hexafluorophosphate and 0.8 wt% of lithium tetrafluoroborate are used as the electrolyte of the nonaqueous electrolytic solution.

After the injection, the inlet is closed by laser welding to complete the assembly of the nonaqueous electrolyte battery 1.

[Initial charging and warming]

The produced nonaqueous electrolyte battery 1 is subjected to the initial charging. Next, the nonaqueous electrolyte battery 1 subjected to the initial charging is warming for 150 hours in air of 60°C.

[Test]

(Quantity of boron in the nonaqueous electrolyte)

The quantity of boron contained in the nonaqueous electrolytic solution of the nonaqueous electrolyte battery 1 is measured by ICP-MS.

As a result of the measurement, 1 g of the nonaqueous electrolytic solution in the nonaqueous electrolyte battery 1 of this example is found to contain 0.5 mg of boron.

(Measurement of the discharge capacity B of the nonaqueous electrolyte battery 1)

The nonaqueous electrolyte battery 1 is charged up to 2.8 V with a constant current at the rate of 0.05 C and at 25°C and then charged with a constant voltage until the current value becomes 0.01 C, and then discharged up to 1.3 V at the rate of 0.05 C.

The discharge capacity B of the nonaqueous electrolyte battery 1 measured in the test is 20.23 Ah.

(Disassembly of the nonaqueous electrolyte battery 1)

The nonaqueous electrolyte battery 1 subjected to the initial charging and the warming is charged up to 2.8 V at 25°C with a constant current at the rate of 0.05 C and then charged with a constant voltage until the current value becomes 0.01 C.

After the charging, the nonaqueous electrolyte battery 1 is disassembled in an Ar atmosphere to take out the electrode group 2. For the electrode group 2 taken out of the battery, the area S where the positive electrode layer 3c is opposed to the negative electrode layer 4c is calculated by using the method described above. The area S is 14090 $cm^2$.

Two plate-like positive electrode samples having a square-plane shape of 1 cm square are cut out from the positive electrode 3 of the electrode group 2 taken out of the battery. Similarly, two plate-like negative electrode samples having a square-plane shape of 1 cm square are cut out from the negative electrode 4 of the electrode group 2 taken out of the battery.

Next, the positive electrode layer 3c formed on one surface of the positive current collector 3a of two cut-out positive electrode samples is dissolved in N-methyl-2-pyrolidone to peel off it from one surface of the positive current collector 3a of each sample and leave only the positive electrode layer 3c formed on one surface of the positive current collector 3a. The two samples thus obtained are set as a first positive electrode sample and a second positive electrode sample.

Similarly, the negative electrode layer 4c formed on one surface of the negative current collector 4a of two cut-out negative electrode samples is dissolved in N-methyl-2-pyrolidone to peel off it from one surface of the negative current collector 4a of each sample and leave only the negative electrode layer 4c formed on one surface of the negative current collector 4a. The two samples thus obtained are set as a first negative electrode sample and a second negative electrode sample.

(Measurement of the discharge capacity $D_C$ and the charge capacity $C_C$ of the positive electrode)

The working electrode 103 including the first positive electrode sample prepared as described above, the counter electrode 104 including Li, and the reference electrode 102 including Li and the separator 5 are provided in an Ar atmosphere to fabricate the first three-pole cell 100 described with reference to FIG. 2. In the nonaqueous electrolyte of the first three-pole cell 100, a mixture of ethylene carbonate and dimethyl carbonate in the ratio of 1 : 1 is used as the nonaqueous solvent and 1 mol/L of lithium hexafluorophosphate is used as the electrolyte.

The fabricated first three-pole cell 100 is discharged at 25°C at the rate of 0.05 C until the potential of the working electrode 103 reaches 3.0 V (vs. Li/Li$^+$). The quantity of electricity that can be discharged by the discharge, that is, the discharge capacity $D_C$ of the positive electrode 3 is measured. The discharge capacity $D_C$ of the positive electrode 3 is 1.41 mAh. In addition, changes of the potential of the first positive electrode sample during the discharge are plotted with respect to the capacity. The result is shown in FIG. 7.

Next, the first three-pole cell 100 is charged up to 4.2 V (vs. Li/Li$^+$) with a constant current at the rate of 0.05 C. Further, the first three-pole cell is charged with a constant voltage until the current value becomes 0.01 C. The quantity of electricity that can be charged by the charge, that is, the charge capacity $C_C$ of the positive electrode 3 is measured. The charge capacity $C_C$ of the positive electrode 3 is 1.45 mAh. In addition, changes of the potential of the positive electrode sample during the charge are plotted with respect to the capacity. The charge curve of the positive electrode 3 is approximately the same as the discharge curve (1) shown in FIG. 7.

(Measurement of the discharge capacity $D_A$ and the charge capacity $C_A$ of the negative electrode)

The working electrode 103 including the first negative electrode sample prepared as described above, the counter electrode 104 including Li, and the reference electrode 102 including Li and the separator 5 are provided in an Ar atmosphere to fabricate a second three-pole cell having a structure similar to that of the first three-pole cell 100. In the nonaqueous electrolyte of the second three-pole cell, a mixture of ethylene carbonate and dimethyl carbonate in the ratio of 1 : 1 is used as the nonaqueous solvent and 1 mol/L of lithium hexafluorophosphate is used as the electrolyte.

The fabricated second three-pole cell is discharged at 25°C at the rate of 0.05 C until the potential of the working electrode 103 reaches 2.0 V (vs. Li/Li$^+$). The quantity of electricity that can be discharged by the discharge, that is, the discharge capacity $D_A$ of the negative electrode 4 is measured. The discharge capacity $D_A$ of the negative electrode 4 is 1.46 mAh. In addition, changes of the potential of the first negative electrode sample during the discharge are plotted with respect to the capacity. The result is shown in FIG. 7 as the curve (2).

Next, the second three-pole cell is charged up to 1.4 V (vs. Li/Li$^+$) with a constant current at the rate of 0.05 C. Further, the second three-pole cell is charged with a constant voltage until the current value becomes 0.01 C. The quantity of electricity that can be charged by the charge, that is, the charge capacity $C_A$ of the negative electrode 4 is measured. The charge capacity $C_A$ of the negative electrode 4 is 1.45 mAh. In addition, changes of the potential of the negative electrode sample during the charge are plotted with respect to the capacity. The charge curve of the negative electrode 4 is approximately the same as the discharge curve (2) shown in FIG. 7.

(Measurement of the closed circuit potential of the negative electrode when the closed circuit potential of the positive electrode becomes 3.4 V (vs. Li/Li$^+$))

The working electrode 103 including the second positive electrode sample prepared as described above, the counter electrode 104 including the second negative sample prepared as described above, and the reference electrode 102 including Li and the separator 5 are provided in an Ar atmosphere to fabricate a third three-pole cell having a structure similar to that of the first three-pole cell 100. In the nonaqueous electrolyte of the third three-pole cell, a mixture of ethylene carbonate and dimethyl carbonate in the ratio of 1 : 1 is used as the nonaqueous solvent and 1 mol/L of lithium hexafluorophosphate is used as the electrolyte.

The fabricated third three-pole cell is discharged at the rate of 0.05 C. The closed circuit potential of the counter electrode 104 when the potential of the working electrode 103 becomes 3.4 V (vs. Li/Li$^+$) during the discharge is 1.80 V (vs. Li/Li$^+$).

$$(\text{Calculation of } (D_A - D_C) \times S/B \text{ and } C_C/C_A)$$

Calculation of $(D_A - D_C) \times S/B$ of the formula (1) from the above data produces 0.035. Calculation of $C_C/C_A$ of the formula (2) produces 1.00.

(Cycle test)

A charge and discharge cycle test of the nonaqueous electrolyte battery 1 in this example is performed in an atmosphere at 40°C. In the charge and discharge cycle, the nonaqueous electrolyte battery 1 is repeatedly charged with a constant current up to 2.8 V at the rate of 1 C and then charged with a constant voltage until the current value becomes 0.01 C and discharged with a constant current at rate of 1 C until the voltage becomes 1.3 V. A rest of 30 min is taken between the charge and the discharge. After undergoing 1000 cycles, the nonaqueous electrolyte battery is charged up to 2.8 V with a constant current at the rate of 0.05 C in an atmosphere at 25°C and then charged with a constant voltage until the current value becomes 0.01 C and discharged with a constant current at the rate of 0.05 C until the voltage becomes 1.3 V, and the discharge capacity at this point is measured. The discharge capacity is 19.32 Ah and the capacity retention ratio before and after the charge and discharge cycle test is 95.5%.

(Example 2)

In the this example, a nonaqueous electrolyte battery 1 according to Example 2 is produced according to the same procedure as in Example 1 except that warming after the initial charging is done in an atmosphere at 100°C for 15 hours.

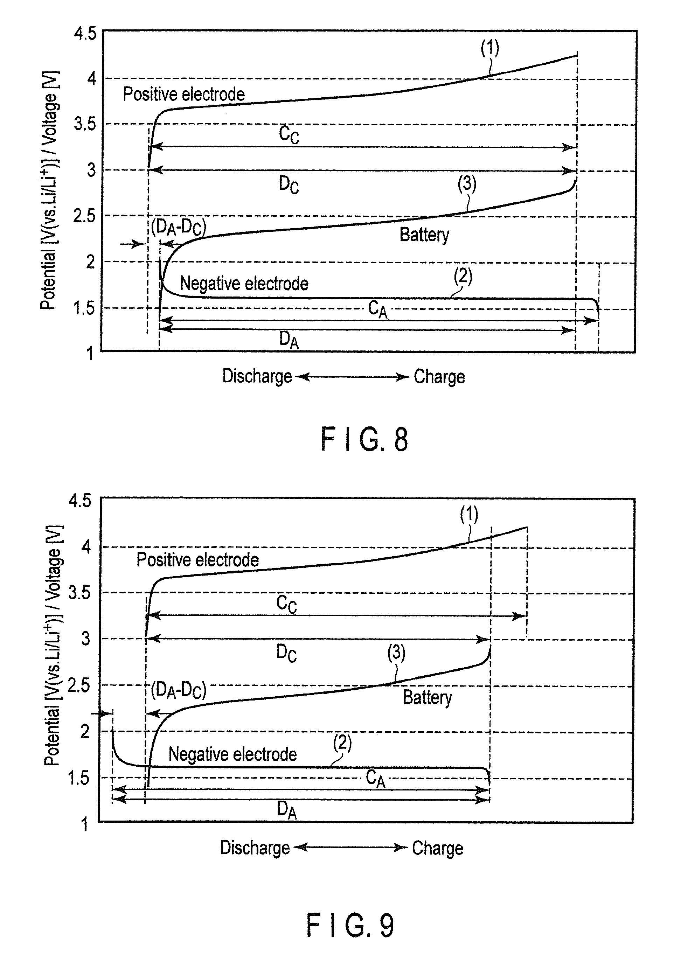

B, S, $D_C$, $C_C$, $D_A$, and $C_A$ are measured according to the same procedure as in Example 1. Each measured value is shown in Table 1 below. Charge and discharge curves obtained when $D_C$, $C_C$, $D_A$, and $C_A$ are measured are shown in FIG. 8. The charge curve of a positive electrode 3 is approximately the same as the discharge curve (1) shown in FIG. 8. The charge curve of a negative electrode 4 is approximately the same as the discharge curve (2) shown in FIG. 8.

Calculation of $(D_A - D_C) \times$ S/B of the formula (1) for the nonaqueous electrolyte battery 1 of Example 2 produces -0.070. Calculation of $C_C/C_A$ of the formula (2) produces 1.00. The closed circuit potential of the negative electrode 4 when the closed circuit potential of the positive electrode 3 becomes 3.4 V (vs. Li/Li$^+$) is 1.80 V (vs. Li/Li$^+$). One gram of the nonaqueous electrolyte in the battery 1 contains 0.35 mg of boron.

A charge and discharge cycle test of the nonaquoeous electrolyte battery is performed according to the same procedure as in Example 1. The capacity retention ratio before and after the charge and discharge cycle test is 96.5%.

(Example 3)

In this example, a nonaqueous electrolyte battery 1 according to the Example 3 is produced according to the same procedure as in Example 1 except that a laminated structure is adopted as the structure of an electrode group 2 and an Al laminate film is used for an exterior member 11.

B, S, $D_C$, $C_C$, $D_A$, and $C_A$ are measured according to the same procedure as in Example 1. Each measured value is shown in Table 1 below.

Calculation of $(D_A - D_C)$ x S/B of the formula (1) for the nonaqueous electrolyte battery 1 of Example 3 produces 0.035. Calculation of $C_C/C_A$ of the formula (2) produces 1.00. The closed circuit potential of a negative electrode 4 when the closed circuit potential of a positive electrode 3 becomes 3.4 V (vs. Li/Li$^+$) is 1.80 V (vs. Li/Li$^+$). One gram of the nonaqueous electrolyte in the battery 1 contains 0.5 mg of boron.

A charge and discharge cycle test of the nonaquoeous electrolyte battery 1 is performed according to the same procedure as in Example 1. The capacity retention ratio before and after the charge and discharge cycle test is 96.6%.

(Example 4)

In this example, a nonaqueous electrolyte battery 1 according to Example 4 is produced according to the same procedure as in Example 1 except that warming after the initial charging is done in an atmosphere at 55°C for 250 hours.

B, S, $D_C$, $C_C$, $D_A$, and $C_A$ are measured according to the same procedure as in Example 1. Each measured value is shown in Table 1 below.

Calculation of $(D_A - D_C)$ x S/B of the formula (1) for the nonaqueous electrolyte battery 1 of Example 4 produces 0.050. Calculation of $C_C/C_A$ of the formula (2) produces 1.20. The closed circuit potential of a negative electrode 4 when the closed circuit potential of a positive electrode 3 becomes 3.4 V (vs. Li/Li$^+$) is 1.60 V (vs. Li/Li$^+$). One gram of the nonaqueous electrolyte contains 0.5 mg of boron.

A charge and discharge cycle test of the nonaquoeous electrolyte battery 1 is performed according to the same procedure as in Example 1. The capacity retention ratio before and after the charge and discharge cycle test is 94.5%.

(Example 5)

In this example, a nonaqueous electrolyte battery 1 according to Example 5 is produced according to the same procedure as in Example 1 except that the amount of coating of the positive electrode slurry is 130 g/m$^2$.

B, S, $D_C$, $C_C$, $D_A$, and $C_A$ are measured according to the same procedure as in Example 1. Each measured value is shown in Table 1 below.

Calculation of $(D_A - D_C)$ x S/B of the formula (1) for the nonaqueous electrolyte battery 1 of Example 5 produces 0.024. Calculation of $C_C/C_A$ of formula (2) produces 1.20. The closed circuit potential of a negative electrode 4 when the closed circuit potential of a positive electrode 3 becomes 3.4 V (vs. Li/Li⁺) is 1.84 V (vs. Li/Li⁺). One gram of the nonaqueous electrolyte contains 0.5 mg of boron.

A charge and discharge cycle test of the nonaquoeous electrolyte battery is performed according to the same procedure as in Example 1. The capacity retention ratio before and after the charge and discharge cycle test is 96.8%.

(Example 6)

In this example, a nonaqueous electrolyte battery 1 according to Example 6 is produced according to the same procedure as in Example 1 except that a mixture of ethylene carbonate and dimethyl carbonate in the ratio of 1 : 1 is used as the nonaqueous solvent of the nonaqueous electrolytic solution and 1 mol/L of lithium hexafluorophosphate and 0.2 wt% of lithium tetrafluoroborate are used as the electrolyte.

B, S, $D_C$, $C_C$, $D_A$, and $C_A$ are measured according to the same procedure as in Example 1. Each measured value is shown in Table 1 below.

Calculation of $(D_A - D_C) \times S/B$ of the formula (1) for the nonaqueous electrolyte battery 1 of Example 6 produces 0.028. Calculation of $C_C/C_A$ of the formula (2) produces 1.00. The closed circuit potential of a negative electrode 4 when the closed circuit potential of a positive electrode 3 becomes 3.4 V (vs. Li/Li⁺) is 1.83 V (vs. Li/Li⁺). One gram of the nonaqueous electrolyte contains 0.01 mg of boron.

A charge and discharge cycle test of the nonaquoeous electrolyte battery 1 is performed according to the same procedure as in Example 1. The capacity retention ratio before and after the charge and discharge cycle test is 94.7%.

(Example 7)

In the this example, a nonaqueous electrolyte battery 1 according to Example 7 is produced according to the same procedure as in Example 1 except that a mixture of ethylene carbonate and dimethyl carbonate in the ratio of 1 : 1 is used as the nonaqueous solvent of the nonaqueous electrolytic solution and 1 mol/L of lithium hexafluorophosphate and 3.2 wt% of lithium tetrafluoroborate are used as the electrolyte.

B, S, $D_C$, $C_C$, $D_A$, and $C_A$ are measured according to the same procedure as in Example 1. Each measured value is shown in Table 1 below.

Calculation of $(D_A - D_C) \times S/B$ of the formula (1) for the nonaqueous electrolyte battery 1 of Example 7 produces -0.035. Calculation of $C_C/C_A$ of the formula (2) produces 1.00. The closed circuit potential of a negative electrode 4 when the closed circuit potential of a positive electrode 3 becomes 3.4 V (vs. Li/Li⁺) is 2.00 V (vs. Li/Li⁺). One gram of the nonaqueous electrolyte contains 3.00 mg of boron.

A charge and discharge cycle test of the nonaquoeous electrolyte battery 1 is performed according to the same procedure as in Example 1. The capacity retention ratio before and after the charge and discharge cycle test is 96.7%.

(Example 8)

In this example, a nonaqueous electrolyte battery according to Example 4 is produced according to the same procedure as in Example 1 except that only $LiNi_{0.6}Co_{0.2}Mn_{0.2}O_2$ is used as the positive active material without using $LiCoO_2$ and the amount of coating of the positive electrode slurry is 105 g/m². 

Measurement by ICP-MS shows that the amount of nickel in the positive electrode layer 3c is 34 wt%.

B, S, $D_C$, $C_C$, $D_A$, and $C_A$ are measured according to the same procedure as in Example 1. Each measured value is shown in Table 1 below.

Calculation of $(D_A - D_C) \times S/B$ of the formula (1) for the nonaqueous electrolyte battery 1 of Example 8 produces 0.018. Calculation of $C_C/C_A$ of the formula (2) produces 1.20. The closed circuit potential of a negative electrode 4 when the closed circuit potential of a positive electrode 3 becomes 3.4 V (vs. Li/Li⁺) is 1.90 V (vs. Li/Li⁺). One gram of the nonaqueous electrolyte contains 0.50 mg of boron.

A charge and discharge cycle test of the nonaquoeous electrolyte battery 1 is performed according to the same procedure as in Example 1. The capacity retention ratio before and after the charge and discharge cycle test is 94.8%.

(Example 9)

In this example, a nonaqueous electrolyte battery 1 according to Example 9 is produced according to the same procedure as in Example 1 except that lithium-titanium composite oxide, graphite, and polyvinylidene fluoride are mixed in the mass ratio of 100 : 1 : 1.

Measurement by ICP-MS shows that the amount of titanium in the negative electrode layer 4c is 51 wt%.

B, S, $D_C$, $C_C$, $D_A$, and $C_A$ are measured according to the same procedure as in Example 1. Each measured value is shown in Table 1 below.

Calculation of $(D_A - D_C) \times S/B$ of the formula (1) for the nonaqueous electrolyte battery 1 of Example 9 produces 0.025. Calculation of $C_C/C_A$ of the formula (2) produces 1.00. The closed circuit potential of a negative electrode 4 when the closed circuit potential of a positive electrode 3 becomes 3.4 V (vs. Li/Li$^+$) is 1.85 V (vs. Li/Li$^+$). One gram of the nonaqueous electrolyte contains 0.50 mg of boron.

A charge and discharge cycle test of the nonaquoeous electrolyte battery is performed according to the same procedure as in Example 1. The capacity retention ratio before and after the charge and discharge cycle test is 97.2%.

(Comparative Example 1)

In this comparative example, a nonaqueous electrolyte battery 1 according to Comparative Example 1 is produced according to the same procedure as in Example 1 except that warming after the initial charging is done in an atmosphere at 110°C for 10 hours.

B, S, $D_C$, $C_C$, $D_A$, and $C_A$ are measured according to the same procedure as in Example 1. Each measured value is shown in Table 1 below.

Calculation of $(D_A - D_C) \times S/B$ of the formula (1) for the nonaqueous electrolyte battery 1 of Comparative Example 1 produces -0.102. Calculation of $C_C/C_A$ of the formula (2) produces 1.00. The closed circuit potential of a negative electrode 4 when the closed circuit potential of a positive electrode 3 becomes 3.4 V (vs. Li/Li$^+$) is 2.70 V (vs. Li/Li$^+$). One gram of the nonaqueous electrolyte contains 0.50 mg of boron.

A charge and discharge cycle test of the nonaquoeous electrolyte battery 1 is performed according to the same procedure as in Example 1. The capacity retention ratio before and after the charge and discharge cycle test is 80.4%.

(Comparative Example 2)

In this comparative example, a nonaqueous electrolyte battery 1 according to Comparative Example 2 is produced according to the same procedure as in Example 1 except that warming after the initial charging is done in an atmosphere at 40°C for 250 hours.

B, S, $D_C$, $C_C$, $D_A$, and $C_A$ are measured according to the same procedure as in Example 1. Each measured value is shown in Table 1 below. Charge and discharge curves obtained when $D_C$, $C_C$, $D_A$, and $C_A$ are measured are shown in FIG. 9. The charge curve of the positive electrode 3 is approximately the same as the discharge curve (1) shown in FIG. 9. The charge curve of a negative electrode 4 is approximately the same as the discharge curve (2) shown in FIG. 9.

Calculation of $(D_A - D_C) \times S/B$ of the formula (1) for the nonaqueous electrolyte battery 1 of Comparative Example 2 produces 0.063. Calculation of $C_C/C_A$ of the formula (2) produces 1.22. The closed circuit potential of a negative electrode 4 when the closed circuit potential of a positive electrode 3 becomes 3.4 V (vs. Li/Li$^+$) is 1.55 V (vs. Li/Li$^+$). One gram of the nonaqueous electrolyte contains 0.50 mg of boron.

A charge and discharge cycle test of the nonaquoeous electrolyte battery 1 is performed according to the same procedure as in Example 1. The capacity retention ratio before and after the charge and discharge cycle test is 79.3%.

(Comparative Example 3)

In this comparative example, a nonaqueous electrolyte battery 1 according to Comparative Example 3 is produced according to the same procedure as in Example 1 except that a mixture of ethylene carbonate and dimethyl carbonate in the ratio of 1 : 1 is used as the nonaqueous solvent of the nonaqueous electrolytic solution and 1 mol/L of lithium hexafluorophosphate is used as the electrolyte.

B, S, $D_C$, $C_C$, $D_A$, and $C_A$ are measured according to the same procedure as in Example 1. Each measured value is shown in Table 1 below.

Calculation of $(D_A - D_C) \times S/B$ of the formula (1) for the nonaqueous electrolyte battery 1 of Comparative Example 3 produces 0.063. Calculation of $C_C/C_A$ of the formula (2) produces 1.00. The closed circuit potential of a negative electrode 4 when the closed circuit potential of a positive electrode 3 becomes 3.4 V (vs. Li/Li$^+$) is 1.56 V (vs. Li/Li$^+$). No boron is contained in the nonaqueous electrolyte.

A charge and discharge cycle test of the nonaquoeous electrolyte battery 1 is performed according to the same procedure as in Example 1. The capacity retention ratio before and after the charge and discharge cycle test is 75.3%.

Table 1

| | Amount of Coating of Negative Electrode 4c (Slurry) [g/m²] | Amount of Coating of Positive Electrode 3c (Slurry) [g/m²] | $D_A$ [mAh/cm²] | $D_C$ [mAh/cm²] | $C_A$ [mAh/cm²] | $C_C$ | S [cm²] | B [Ah] | $(D_A-D_C) \times S/B$ | $C_C/C_A$ | Potential of Negative Electrode 4 when Potential of Positive Electrode 3 is 3.4V (vs. Li/Li⁺) [V (vs. Li/Li⁺)] | Quantity of Boron in 1g of Nonaqueous Electrolyte [mg] | Capacity Retention Ratio [%] |
|---|---|---|---|---|---|---|---|---|---|---|---|---|---|
| Example 1 | 110 | 110 | 1.46 | 1.41 | 1.45 | 1.45 | 14090 | 20.23 | 0.035 | 1.00 | 1.80 | 0.50 | 95.5 |
| Example 2 | 110 | 110 | 1.39 | 1.49 | 1.45 | 1.45 | 14090 | 20.12 | -0.070 | 1.00 | 2.50 | 0.35 | 96.5 |
| Example 3 | 110 | 110 | 1.46 | 1.41 | 1.45 | 1.45 | 13840 | 20.02 | 0.035 | 1.00 | 1.80 | 0.50 | 96.6 |
| Example 4 | 110 | 110 | 1.48 | 1.41 | 1.45 | 1.74 | 14090 | 19.72 | 0.050 | 1.20 | 1.60 | 0.50 | 94.5 |
| Example 5 | 110 | 130 | 1.46 | 1.41 | 1.45 | 1.74 | 12040 | 20.12 | 0.030 | 1.20 | 1.84 | 0.50 | 96.8 |
| Example 6 | 110 | 110 | 1.45 | 1.41 | 1.45 | 1.45 | 14090 | 20.13 | 0.028 | 1.00 | 1.83 | 0.01 | 94.7 |
| Example 7 | 110 | 110 | 1.41 | 1.46 | 1.45 | 1.45 | 14090 | 20.25 | -0.035 | 1.00 | 2.00 | 3.00 | 96.7 |
| Example 8 | 110 | 105 | 1.46 | 1.43 | 1.45 | 1.74 | 13520 | 23.02 | 0.018 | 1.20 | 1.90 | 0.50 | 94.8 |
| Example 9 | 105 | 110 | 1.45 | 1.41 | 1.45 | 1.45 | 13520 | 21.21 | 0.025 | 1.00 | 1.85 | 0.50 | 97.2 |
| Comparative Example 1 | 110 | 110 | 1.35 | 1.49 | 1.45 | 1.45 | 14090 | 19.42 | -0.102 | 1.00 | 2.70 | 0.50 | 80.4 |
| Comparative Example 2 | 110 | 110 | 1.50 | 1.41 | 1.45 | 1.77 | 14090 | 20.13 | 0.063 | 1.22 | 1.55 | 0.50 | 79.3 |
| Comparative Example 3 | 110 | 110 | 1.50 | 1.41 | 1.45 | 1.45 | 14090 | 20.13 | 0.063 | 1.00 | 1.56 | 0.00 | 75.3 |

[Evaluation]

For the nonaqueous electrolyte batteries 1 according to Example 1 to Example 9, as shown in Table 1, the values ($D_A$ - $D_C$) x S/B of the formula (1) are within the range of -0.07 or more but 0.05 or less, that is, the difference between the discharge capacity $D_C$ of the positive electrode 3 and the discharge capacity $D_A$ of the negative electrode 4 is small.

In the nonaqueous electrolyte battery 1 of Example 1, for example, as is evident from the charge and discharge curves shown in FIG. 7, thanks to a small difference between the discharge capacity $D_C$ of the positive electrode 3 and the discharge capacity $D_A$ of the negative electrode 4, the potential of the negative electrode 4 rises rapidly when the voltage (shown as the curve (3) in FIG. 7) of the nonaqueous electrolyte battery 1 rapidly falls accompanying a rapid fall of the potential of the positive electrode 3. Thus, in the nonaqueous electrolyte battery 1 according to Example 1, the potential of the negative electrode 4 can reach 1.80 V (vs. Li/Li$^+$) at the end of discharge.

In the nonaqueous electrolyte battery 1 according to Example 2, as is evident from the charge and discharge curves shown in FIG. 8, the voltage (shown as the curve (3) in FIG. 7) of the nonaqueous electrolyte battery 1 rapidly falls accompanying a rapid rise of the potential of the negative electrode 4. In the nonaqueous electrolyte battery 1 according to Example 2, however, thanks to a small difference between the discharge capacity $D_C$ of the positive electrode 3 and the discharge capacity $D_A$ of the negative electrode 4, the potential of the positive electrode 3 is about to fall rapidly when the potential of the negative electrode 4 is rising rapidly. Thus, in the nonaqueous electrolyte battery 1 according to Example 2, the potential of the negative electrode 4 can be prevented from becoming too noble at the end of discharge.

Therefore, for the nonaqueous electrolyte batteries 1 according to Example 1 to Example 9, as shown in Table 1, the closed circuit potential of the negative electrode 4 when the closed circuit potential of the positive electrode 3 is 3.4 V (vs. Li/Li$^+$) can be made to be 1.6 V (vs. Li/Li$^+$) or more but 2.5 V (vs. Li/Li$^+$) or less. In the nonaqueous electrolyte batteries 1 according to Example 1 to Example 9, because the closed circuit potential of the negative electrode 4 at the end of discharge can be made to fall within the above range, the potential of the positive electrode 3 can be prevented from becoming too base also at the end of discharge. In addition, the nonaqueous electrolyte battery 1 according to Example 1 to Example 9 can prevent the potential of the negative electrode 4 from becoming too noble at the end of discharge. That is, in the nonaqueous electrolyte batteries 1 according to Example 1 to Example 9, degradation of the positive electrode 3 and the negative electrode 4 can be prevented without raising the final discharge voltage. Therefore, the nonaqueous electrolyte batteries 1 according to Example 1 to Example 9 can exhibit an excellent cycle life.

On the other hand, as shown in Table 1, the value of ($D_A$ - $D_C$) x S/B of the formula (1) for the nonaqueous electrolyte battery 1 according to Comparative Example 1 is -0.102. This means that the difference between the discharge capacity $D_C$ of the positive electrode 3 and the discharge capacity $D_A$ of the negative electrode 4 is too large. Therefore, at the end of discharge of the nonaqueous electrolyte battery 1, the potential of the negative electrode 4 is too noble and the negative electrode 4 is overcharged.

As shown in Table 1, the values of ($D_A$ - $D_C$) x S/B of the formula (1) for the nonaqueous electrolyte battery 1 according to Comparative Examples 2 and 3 are 0.063. This means that the difference between the discharge capacity $D_C$ of the positive electrode 3 and the discharge capacity $D_A$ of the negative electrode 4 is too large.

In the nonaqueous electrolyte battery 1 according to Comparative Example 2, for example, as is evident from the charge and discharge curve in FIG. 9, because the difference between the discharge capacity $D_C$ of the positive electrode 3 and the discharge capacity $D_A$ of the negative electrode 4 is too large, the potential of the negative electrode 4 is not about to rise rapidly when the potential of the positive electrode 3 is falling rapidly. Thus, the rapid fall of the voltage of the nonaqueous electrolyte battery 1 is later than the rapid fall of the potential of the positive electrode 3. For this reason, when the voltage (shown as the curve (3) in FIG. 9) of the nonaqueous electrolyte battery 1 according to Comparative Example 2 is at the end of discharge, the potential of the positive electrode 3 is too base and the positive electrode 3 is overcharged.

Therefore, the nonaqueous electrolyte batteries according to Comparative Examples 2 and 3 cannot prevent the positive electrode 3 from being overcharged at the end of discharge.

For the above reasons, as shown in Table 1, the nonaqueous electrolyte batteries 1 according to Example 1 to Example 9 show a more excellent capacity retention ratio, that is, a more excellent cycle life than the nonaqueous electrolyte batteries 1 according to Comparative Examples 1 to 3.

In at least one of the embodiments and examples described, B, S, $D_C$, and $D_A$ satisfy the relation (1): $-0.07 \leq$ ($D_A$-$D_C$) x S/B $\leq 0.05$. Such a nonaqueous electrolyte battery can prevent the positive electrode potential from becoming too base in the discharge end and therefore, the degradation of the positive electrode can be prevented without raising the final discharge voltage. As a result, the nonaqueous electrolyte battery can exhibit an excellent cycle life.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A nonaqueous electrolyte battery (1) comprising:

    an electrode group (2) comprising a positive electrode (3) comprising a positive electrode layer (3c) comprising nickel in a quantity of 12 wt% or more but 34 wt% or less and a negative electrode (4) comprising a negative electrode layer (4c) comprising titanium in a quantity of 39 wt% or more but 51 wt% or less and a portion of which is opposed to the positive electrode layer (3c); and
    a nonaqueous electrolyte held by the electrode group (2),
    wherein a following relation (1) is satisfied:

$$-0.07 \leq (D_A - D_C) \times S/B \leq 0.05 \quad (1)$$

    wherein the B [Ah] is a discharge capacity of the nonaqueous electrolyte battery (1), the B being obtained by charging the nonaqueous electrolyte battery (1) up to a maximum usage voltage with a constant current at a rate of 0.05 C and at 25°C, and then charging the nonaqueous electrolyte battery (1) with a constant voltage until a current value becomes 0.01 C, and then discharging the nonaqueous electrolyte battery (1) up to a final discharge voltage at a rate of 0.05 C;
    the S [cm$^2$] is an area of the portion of the negative electrode layer (4c) opposed to the positive electrode layer (3c);
    the $D_C$ [mAh/cm$^2$] is a discharge capacity of the positive electrode (3), the $D_C$ being obtained by discharging the positive electrode (3) from a fully charged state up to 3.0 V (vs. Li/Li$^+$) at 25°C and at a rate of 0.05 C; and
    the $D_A$ [mAh/cm$^2$] is a discharge capacity of the negative electrode (4), the $D_A$ being obtained by discharging the negative electrode (4) from a fully charged state up to 2.0 V (vs. Li/Li$^+$) at 25°C and at a rate of 0.05 C.

2. The nonaqueous electrolyte battery (1) according to claim 1, wherein a following relation (2) is satisfied:

$$0.8 \leq C_C/C_A \leq 1.2 \quad (2),$$

    where the $C_C$ [mAh/cm$^2$] is a charge capacity of the positive electrode, the $C_C$ being obtained by discharging the positive electrode (3) from a fully charged state up to 3.0 V (vs. Li/Li$^+$) at 25°C and at a rate of 0.05 C, and then charging the positive electrode (3) up to 4.2 V (vs. Li/Li$^+$) with a constant current at a rate of 0.05 C, and then charging the positive electrode (3) with a constant voltage until a current value becomes 0.01 C; and
    the $C_A$ [mAh/cm$^2$] is a charge capacity of the negative electrode (4), the $C_A$ being obtained by discharging the negative electrode (4) from a fully charged state up to 2.0 V (vs. Li/Li$^+$) at 25°C and at a rate of 0.05 C, and then charging the negative electrode (4) up to 1.4 V (vs. Li/Li$^+$) with a constant current at a rate of 0.05 C, and then charging the negative electrode (4) with a constant voltage until a current value becomes 0.01 C.

3. The nonaqueous electrolyte battery (1) according to claim 1, wherein a closed circuit potential of the negative electrode (4) when a closed circuit potential of the positive electrode (3) becomes 3.4 V (vs. Li/Li$^+$) during the nonaqueous electrolyte battery (1) is discharged at a rate of 0.05 C is 1.6 V (vs. Li/Li$^+$) or more but 2.5 V (vs. Li/Li$^+$) or less.

4. The nonaqueous electrolyte battery (1) according to claim 1, wherein the nonaqueous electrolyte contains boron in a quantity of 0.01 to 3 mg per 1 g of the nonaqueous electrolyte.

F I G. 1

F I G. 2

F I G. 3

FIG. 4

F I G. 5

F I G. 6

F I G. 7

FIG. 8

FIG. 9

Europäisches
Patentamt

European
Patent Office

Office européen
des brevets

## EUROPEAN SEARCH REPORT

**Application Number**

EP 14 15 7842

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/072080 A1 (INAGAKI HIROKI [JP] ET AL) 29 March 2007 (2007-03-29) <br> * paragraph [0179]; examples 1-20,24-25 * <br> ----- | 1-4 | INV. <br> H01M4/485 <br> H01M4/505 <br> H01M4/525 <br> H01M10/0525 <br> H01M10/0568 <br> H01M10/44 |
| X | US 2007/009797 A1 (TAKAMI NORIO [JP] ET AL) 11 January 2007 (2007-01-11) <br> * paragraph [0106] - paragraph [0109] * <br> ----- | 1-4 | |
| X | US 2007/009798 A1 (INAGAKI HIROKI [JP] ET AL) 11 January 2007 (2007-01-11) <br> * paragraphs [0158], [0160], [0181] * <br> ----- | 1-4 | |

| | |
|---|---|
| | TECHNICAL FIELDS SEARCHED (IPC) |
| | H01M |

The present search report has been drawn up for all claims

| Place of search | Date of completion of the search | Examiner |
|---|---|---|
| Munich | 22 May 2014 | Steinreiber, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 14 15 7842

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2014

| Patent document cited in search report | | | Publication date | Patent family member(s) | | | Publication date |
|---|---|---|---|---|---|---|---|
| US 2007072080 | A1 | | 29-03-2007 | CN | 1941459 | A | 04-04-2007 |
| | | | | JP | 4625744 | B2 | 02-02-2011 |
| | | | | JP | 2007095496 | A | 12-04-2007 |
| | | | | KR | 20070036707 | A | 03-04-2007 |
| | | | | US | 2007072080 | A1 | 29-03-2007 |
| US 2007009797 | A1 | | 11-01-2007 | JP | 4213687 | B2 | 21-01-2009 |
| | | | | JP | 2007018863 | A | 25-01-2007 |
| | | | | US | 2007009797 | A1 | 11-01-2007 |
| US 2007009798 | A1 | | 11-01-2007 | CN | 1893166 | A | 10-01-2007 |
| | | | | JP | 2007018883 | A | 25-01-2007 |
| | | | | KR | 20070006581 | A | 11-01-2007 |
| | | | | US | 2007009798 | A1 | 11-01-2007 |
| | | | | US | 2012009460 | A1 | 12-01-2012 |
| | | | | US | 2013029228 | A1 | 31-01-2013 |

EPO FORM P0459

For more details about this annex : see Official Journal of the European Patent Office, No. 12/82